# EUROPEAN PATENT SPECIFICATION

(11) **EP 2 162 278 B1**
(45) Date of publication and mention of the grant of the patent: **07.05.2014**
(21) Application number: 07825916.5
(22) Date of filing: 11.07.2007
(51) Int. Cl.: B29D 30/06, B29D 30/72, B29C 35/02

(54) **PROCESS AND APPARATUS FOR VULCANIZATION AND MOULDING OF VEHICLES TYRES**
VERFAHREN UND VORRICHTUNG ZUM VULKANISIEREN UND FORMEN VON FAHRZEUGREIFEN
PROCEDE ET APPAREIL DE VULCANISATION ET DE MOULAGE DE PNEUS POUR VEHICULES

(43) Date of publication of application: 17.03.2010
(73) Proprietor: Pirelli Tyre S.p.A., 20126 Milano (IT)
(72) Inventor: SECCHI, Mario, 20126 Milano (IT); BOLZONI, Roberto, 20126 Milano (IT)
(74) Representative: Tansini, Elio Fabrizio
(86) International application number: PCT/IB2007/052768
(87) International publication number: WO 2009/007790

(56) References cited:
- GB-A- 2 341 339
- JP-A- 1 310 913
- JP-A- 11 333 844
- JP-A- 61 019 314
- JP-A- 63 264 308
- US-A- 2 296 016

## Description

The present invention relates to an apparatus and a process for moulding and vulcanizing of tyres.

A tyre for vehicle wheels generally comprises a carcass structure including at least one carcass ply having respectively opposite end flaps in engagement with respective annular anchoring structures, integrated into the regions usually identified as "beads", which have an inner diameter substantially corresponding to a so-called "fitting diameter" of the tyre on a respective mounting rim.

Associated with the carcass structure is a belt structure comprising one or more belt layers, located in radial superposed relationship with each other and with the carcass ply, having textile or metallic reinforcing cords with a crossed orientation and/or substantially parallel to the circumferential extension direction of the tyre. A tread band is applied to the belt structure at a radially external position, which tread band too is made of elastomeric material like other semifinished products constituting the tyre.

To the side surfaces of the carcass structure, which each extends from one of the side edges of the tread band to the respective annular structure anchoring to the beads, respective sidewalls in elastomeric material are applied in an axially external position, which can also be previoulsy manufactured as drawn or extruded profiles.

Subsequently to building of the green tyre carried out through assembly of the respective components, moulding and vulcanisation treatment is carried out that aims to cause structural stabilisation of the tyre through cross-linking of the elastomeric compositions and also to imprint a desired tread pattern on the tread band. The moulding and vulcanization treatment also makes it possible to imprint possible distinctive graphic marks at the tyre sidewalls. For example, said graphic marks may consist of wording that includes the brand of the tyre and/or of the manufacturer, its technical characteristics (tyre dimensions, maximum load, rotation direction, etc.), initials indicating compliance with regulatory specifications and/or ornamental motifs.

To this end the negative of the motifs to be imprinted on the tyres is hollowed from the mould cheeks by milling.

US Patent 5,382,402 discloses a mould shell with notches corresponding to the shape of the marks on the tyre sidewall. The notches contain removable inserts that reproduce the mark to be obtained on the tyre and can be made to slide inside the notch to make marks in relief or recess.

US Patent 7,021,914 discloses a tyre mould with a moulding face and a ventilation structure. The ventilation structure has a hole that opens onto the moulding face. An insert is removably placed in the hole to form part of the moulding face and delimits the micro-slot which allows venting. The insert may have the shape of a letter to imprint on the tyre sidewall.

The Applicant has addressed the problem of how to make the aesthetic appearance of the tyre sidewall more attractive, perceiving that the tyre sidewall can bear more than just technical information.

Document JP61019314 discloses a mold for tyre with side protector comprising annular insert members embedded in a groove, wherein a clearance is kept between a part of the groove and a parallel part of the insert member. Document JP63264308 discloses a tire vulcanizing molding die comprising side rings respectively fitted to the inner surfaces of side plates on both the right and left sides of the mold and fixed to the side plates with bolts. A large number of fine grooves are formed both on the inner diametral side peripheral surface and on the outer diametral side peripheral surface of the side rings.

Document GB2341339 discloses a tyre mould comprising two annular sideplates separated by an annular tread ring. Interior surfaces of the respective plates and ring together define the exterior profile of respectively the sidewalls and tread of the tyre. The sideplates have concentric annular grooves formed in its interior surface. An annular insert ring is fitted into the annular groove. An air-escape path is provided between the annular insert ring and the annular groove and thereafter via a vent hole to the exterior of the mould. Document JP1310913 discloses a tire vulcanization mold provided with a labeling part with projecting characters which is fitted into a recess of a side mold part and fixed with fastening means.

Document US2296016 discloses a tire mold having a changeable insert occupying a recess in the mold for forming a suitable designation in the tire surface. A suitable tool acts on a screw in the mold cavity to free and remove the insert.

Document JP11333844 discloses a mold for vulcanizing tire comprising a bead ring detachably fixed to an inner periphery of an annular mold body and a replaceable segment piece detachably fixed to a recess formed on a sidewall molding surface of the ring side of the body to mold a display mark on a surface of the sidewall of the tire.

In fact the Applicant perceived that, since the sidewall is one of the most visible parts of the tyres, it has a high suggestive power that can influence the decisions of consumers.

The Applicant therefore has addressed the problem to improve the tyre moulding and vulcanization process with special focus on creating ornamental and/or decorative motifs on the sidewall.

The Applicant has addressed the problem of increasing the versatility of the vulcanization moulds, especially regarding the possibility of making different graphic marks on the tyre sidewalls using substantially the same mould.

Furthermore, the Applicant has addressed the problem of minimizing the costs of producing the aforesaid ornamental and/or decorative motifs.

The Applicant has also addressed the problem of improving the quality and definition of the aforesaid graphic marks.

According to the present invention, the Applicant has found that by producing a negative of the aforesaid graphic marks on an annular insert to be mounted subsequently on a respective cavity obtained in the mould, it is possible to improve the quality of the graphic marks imprinted on the tyre sidewall while reducing the costs of the moulding and vulcanization process.

More specifically, according to a first aspect, the present invention relates to tyre moulding and vulcanization apparatus according to claim 1.

According to another aspect, the present invention entails a tyre moulding and vulcanization process, according to claim 18.

Particular embodiments of the invention are the subject of the respective dependent claims.

Using the removable annular insert makes it possible to avoid making the graphic marks directly on the shells that, due to their intrinsic shape, are difficult to work by means of traditional milling methods. Moreover, making the aforesaid graphic marks on the annular inserts enables the attainment of a higher precision and quality of the marks and therefore, among other things, a more defined outline in the designs imprinted on the tyre. In fact working the annular insert will be simplified and more precise because it is done separate from the context of the shell.

The apparatus and the process according to the present invention can also have one or more of the preferred characteristics described below.

Preferably the graphic marks on the moulding face of the annular insert are obtained by photoengraving.

In alternative, the graphic marks on the moulding face of the annular insert are obtained by spark erosion. Both of the aforesaid techniques make it possible to obtain on the insert, and subsequently on the tyre, complex and well-defined graphic marks at relatively low costs.

Moreover, preferably the annular insert has seats for auxiliary inserts.

The possibility of introducing auxiliary inserts, which also have graphic marks to imprint on the tyre, in the annular insert increases the number of decorative combinations.

According to one embodiment, the annular insert is made of aluminum.

In alternative the annular insert is made of steel. According to an embodiment variation, the annular insert is made of plastic.

Regardless of the specific choice, the material must in any case be able to withstand vulcanization temperatures.

Furthermore, the apparatus includes devices for locking the annular insert into the annular groove. Preferably, the apparatus includes devices for adjusting the depth of the.position of the annular insert into the annular groove.

Preferably, in an operative configuration, the moulding face of the annular insert projects beyond a surface of the shell adjacent to said moulding face by a higher thickness of about 0.5 mm.

Preferably, in an operative configuration, the moulding face of the annular insert projects beyond a surface of the shell adjacent to said moulding face by a lower thickness of about 2 mm.

The above-mentioned adjustment makes it possible to easily vary the thickness of the graphic marks and/or the depth of the same in the tyres without having to change the annular insert.

Preferably, the annular insert is positioned in correspondence to an area of maximum axial width of the moulding cavity.

This area corresponds to the maximum cord of the tyre. Therefore the depth variation of the graphic marks located in correspondence to the maximum axial width makes it possible to accurately check said maximum cord with precision.

Preferably, the ratio between one radial dimension of the annular insert and the height of the tyre sidewall is greater than about 0.3.

Moreover the ratio between one radial dimension of the annular insert and the height of the tyre sidewall is less than about 0.7.

Preferably, a first portion of a radial dimension of the annular insert is positioned radially internal to an area of maximum axial width of the moulding cavity; the ratio between the aforesaid first portion and the radial dimension of the annular insert is greater than about 0.1.

Moreover, a first portion of a radial dimension of the annular insert is positioned radially internal to an area of maximum axial width of the moulding cavity; the ratio between said first portion and the radial dimension of the annular insert is less than about 0.4.

According to an embodiment, the annular insert has tapered sidewalls inserted in the annular groove and facing the sidewalls of said annular groove. Preferably the tapered sidewalls form an angle to the respective sidewalls of the annular groove of more than 5°.

Moreover, the tapered sidewalls form an angle to the respective sidewalls of the annular groove of less than about 10°.

The tapering of the insert towards the bottom of the annular groove serves mainly to avoid the generation of stresses generation of stresses due to dilation of the materials during the heating of the mould.

Moreover, preferably between the moulding face of the annular insert and the shell there are vent gaps for the air in fluid communication having a delimited space between the tapered sidewalls of said annular insert and the sidewalls of said annular groove.

The presence of said space makes it possible to improve the venting of air that stays trapped between the tyre and the mould.

Moreover, preferably each mould shell is made in one piece.

The realization of a single piece makes the mould more rigid and therefore also ensures the proper shape of the vulcanized tyre and of the imprinted graphic marks. Preferably, the phase of preparing an annular insert includes: making graphic marks on the moulding face previous to mounting said annular insert into the annular groove.

Making the insert and executing the graphic marks on it separately from the cheeks lends greater versatility to the mould-building processes, ensures greater precision and speed in the execution of the graphic marks to be imprinted on the tyress and minimizes the mould production costs.

According to an embodiment, the phase of preparing an annular insert includes: making graphic marks on the moulding face by means of photoengraving.

In alternative, the annular insert preparation phase includes: making graphic marks on the moulding face by spark erosion.

Moreover, preferably the phase of preparing an annular insert includes: making seats for auxiliary inserts on the moulding face of the annular insert.

More preferably, the annular insert preparation phase includes: making seats for auxiliary inserts on the moulding face of the annular insert before mounting the annular insert inside the annular groove.

Even more preferably, the annular insert preparation phase includes: making seats for auxiliary inserts on the moulding face of the annular insert; installing the auxiliary inserts in the seats of the moulding face of the annular insert before mounting said annular insert inside the annular seat.

Moreover, preferably the phase of mounting an annular insert includes: adjusting the depth of the annular insert in the annular groove.

Moreover, preferably after the phase of applying heat to a green tyre, the following phases are executed: opening the mould; removing the vulcanized tyre; replacing the annular insert with a new annular insert to imprint different graphic marks on the sidewall of a subsequent tyre; introducing a subsequent green tyre to be vulcanized in the moulding cavity; closing the mould to prepare the working surfaces to work on the beads or sidewalls of said subsequent green tyre to be vulcanized; pressing said subsequent green tyre against the working surfaces to impress the graphic marks on the tyre sidewall and applying heat to said subsequent green tyre.

The possibility of easily and rapidly substituting the annular insert enables the creation of tyre samples with different graphic marks to be submitted, for example, for final approval.

It is therefore possible to run appearance trials on prototype vulcanized coverages by using the cheeks with various types of annular inserts.

It is even possible to vary the design of the graphic layout (wording and aesthetic motifs) on already-built cheeks or on a range of products not yet completed.

If it is desired to change the range of products, replacing the annular insert will make it possible to totally recuperate the cheeks.

Additionally, rapid replacement is possible with the previously prepared annular inserts in cases of breakdown, breakage, small defects in appearance resulting from using the cheeks at the factories.

The mould can be built modularly. In fact, while the cheek profile is being made, the annular insert can be realized simultaneously on another machine or at the premises of an outside supplier.

Further characteristics and advantages will become clearer by the detailed description of a preferred, but not exclusive, method of execution of an apparatus and process for moulding and vulcanization of vehicle tyres, according to this invention.

This description will be given below with reference to the attached drawings, which are provided only by way of an indicative and therefore not limiting example, in which:
- figure 1 shows a schematic view of a diametral section of half of a mould making up a tyre moulding and vulcanization apparatus according to the present invention;
- figure 2 shows a schematic view of a diametral section of a portion of a shell of the mould in figure 1 not part of the present invention;
- figure 2a shows an embodiment variation of the portion of figure 2 according to the present invention;
- figure 2b shows the portion of figure 2a according to a different diametral section according to the present invention;
- figure 3 is a plan view of an annular insert partially visible in figures 2, 2a and 2b;
- figure 3a is a view of the diametral section of the annular insert of figure 3.

In reference to the above-mentioned figures, 1 fully indicates a vulcanization mould pertaining to a moulding and vulcanization apparatus of tyres for vehicle wheels according to the present intervention.

The moulding and vulcanization apparatus is part of an apparatus for making tyres for vehicle wheels, which generally includes devices for forming a green tyre 2 and devices that can transfer the green tyre 2 into a moulding cavity 3 of the vulcanization mould 1. The moulding cavity 3 has a shape corresponding to the outer shape to give to the vulcanized tyre 2. Said devices for forming and transferring the tyre 2 are not shown and are not further described because they can be made in any convenient way.

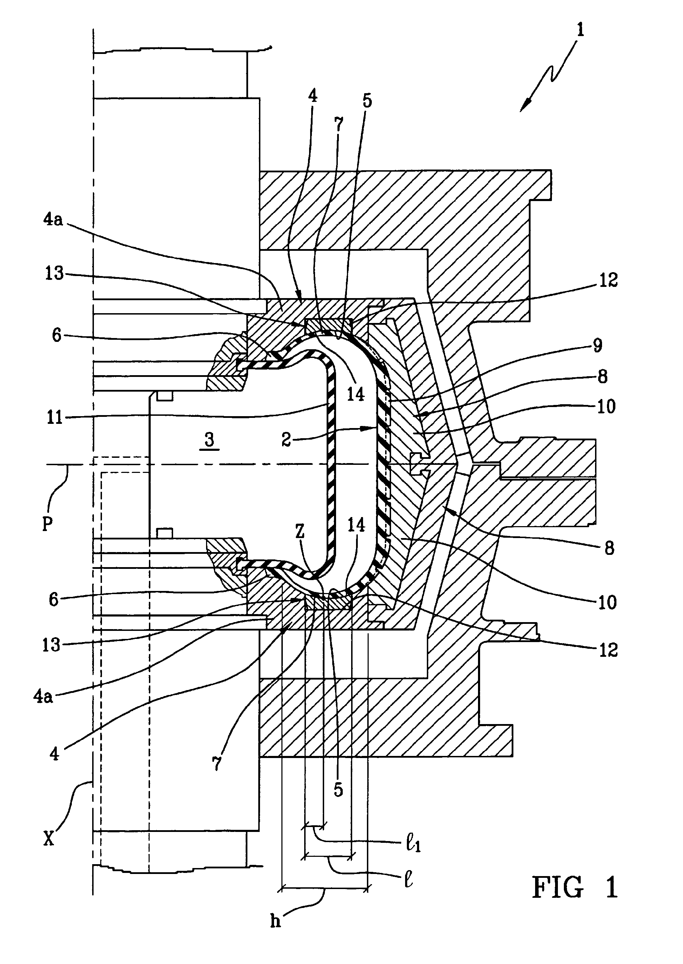

As seen in figure 1, the mould 1 has a pair of axially opposite shells 4 that can be reciprocally coupled in correspondence to an equatorial plane "P". Each of the shells 4 include a working surface 5 predisposed to work on the beads 6 and sidewalls 7 of a green tyres 2 to be vulcanized. The working surface 5 therefore presents an annular development that is substantially coaxial to tyre 2.

The shells 4 reciprocally located near each other on the said equatorial plane also define a circumferential portion 8 predisposed to work against a tread band 9 of the tyre 2 to be vulcanized.

In the nonlimiting example shown, the mould 1 is of the sector type.

Each of the two shells 4 have a cheek 4a with a working surface 5 and a plurality of circumferential sectors 10 separable from the cheek 4a and bearing half of the circumferential portion 8. When the mould is closed; the circumferential sectors 10 define, along with the cheeks 4a, the containment walls of the mould cavity 3.

Each of the cheeks 4a is also preferably realized in one piece by fusion and/or machining to remove material.

According to an example variation not shown, the mould 1 is the type having two halves, in other words each of the shells 4 consists of one piece and therefore defines a semi-part of the mould 1. An inside surface of each of the two shells 4 includes the working surface 5 predisposed to work on the beads 6 and sidewalls 7 of the green tyre 2 to be vulcanized and half of the circumferential portion 8 working on the tread band 9. Whether the mould is the sector type or in two halves, the containment walls delimit an inside surface of the mould cavity 3 countershaped to the final shape to be given to the tyre 2.

After being closed in the mould 1, the green tyre 2 is pressed against the containment walls by means of a device designed for that purpose, for example defined by a membrane 11. Subsequent or simultaneous to the pressing phase, heat is applied to the tyre 2 pressed against the containment walls.

By effect of pressing, appropriate reliefs disposed on the sectors 10 and on the shells 4 determine the formation of a desired tread pattern on the tread band 9 of the tyre 2, and a plurality of graphic marks on the sidewalls 7 of the tyre 2. The heat applied determines the cross-linking of the elastomeric material which the tyres 2 is made of. When this cycle is finished, the mould 1 is opened and the moulded and vulcanized tyre 2 is removed from it.

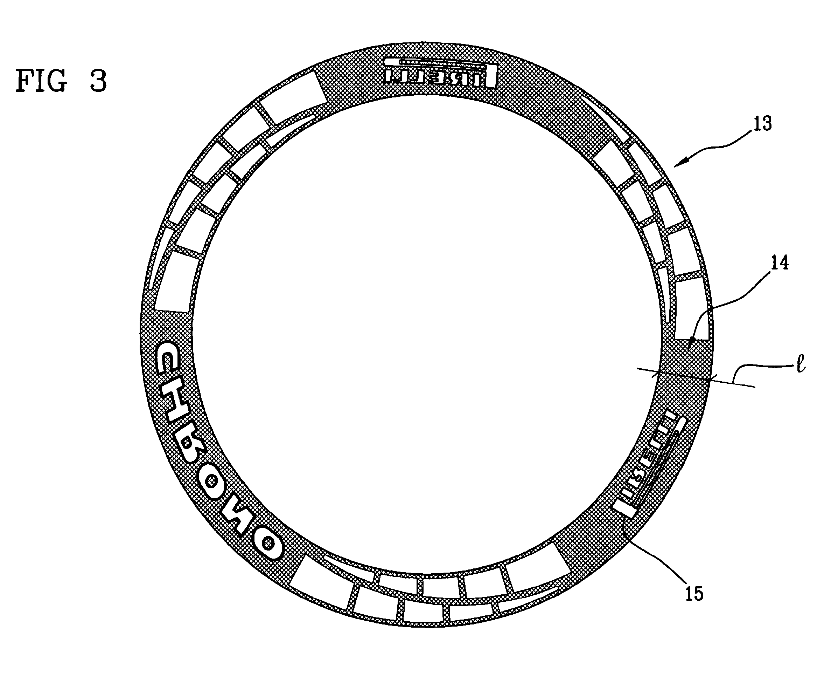

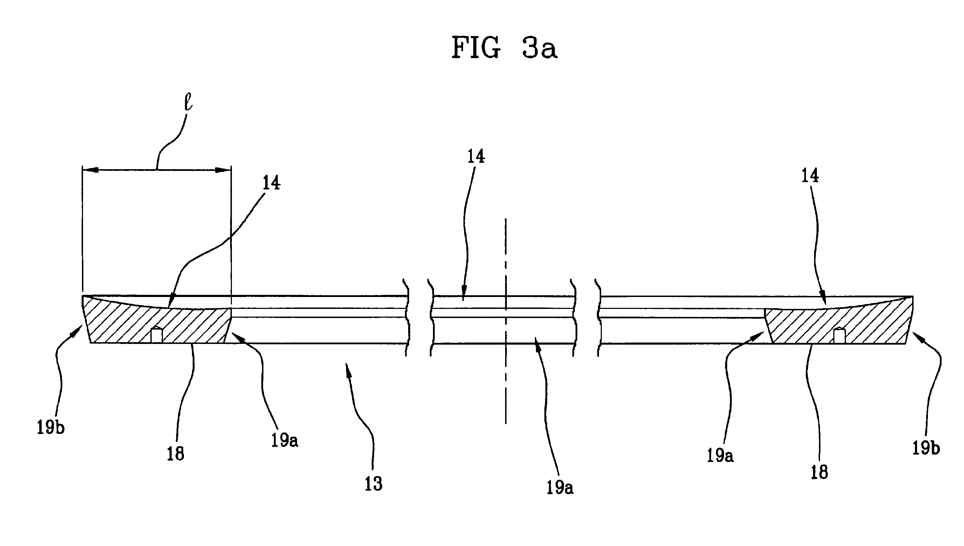

On the working surface 5 of at least one of the two shells 4, and preferably both, a annular groove is obtained 12, which extends continuously along the whole annular development of the working surface 5 and is predisposed to receive a respective annular insert 13. This annular insert 13 is fully visible in figures 3 and 3a.

The annular insert 13 is removably mounted in the annular groove 12 and has a moulding face 14 that, when the annular insert 13 is installed in the annular groove 12, is opposite the moulding cavity 3. The moulding face 14 has graphic marks 15 to imprint on the sidewall 7 of the vulcanized tyre 2. As shown by ways of examples only in figure 3, these graphic marks 15 could be words describing the brand of the tyre and/or its manufacturer, technical characteristics (tyre dimensions, maximum load, rotation direction, etc.), initials indicating compliance with regulatory specifications and/or ornamental motifs. The ornamental motifs can be defined by various textures to give the sidewall of the tyre 2 a particular look, for example with an opaque or glossy finish.

Said graphic marks 15 appear as a negative on the moulding face 14 in such a way that they are imprinted as a positive on the sidewall of the tyre 2. The graphic marks 14 are delimited by reliefs and matching recesses shaped on the said moulding face 14.

These reliefs/recesses can have thicknesses/depths from a few tenths of a millimeter to a few millimeters and are preferably realized by photoengraving and/or spark erosion and/or mechanical removal of the material. The annular insert 13 is therefore made of a material that can withstand the vulcanization temperatures without being altered and furthermore can be worked according to the aforementioned techniques. Preferably, the annular insert 13 is made of steel, aluminum or plastic.

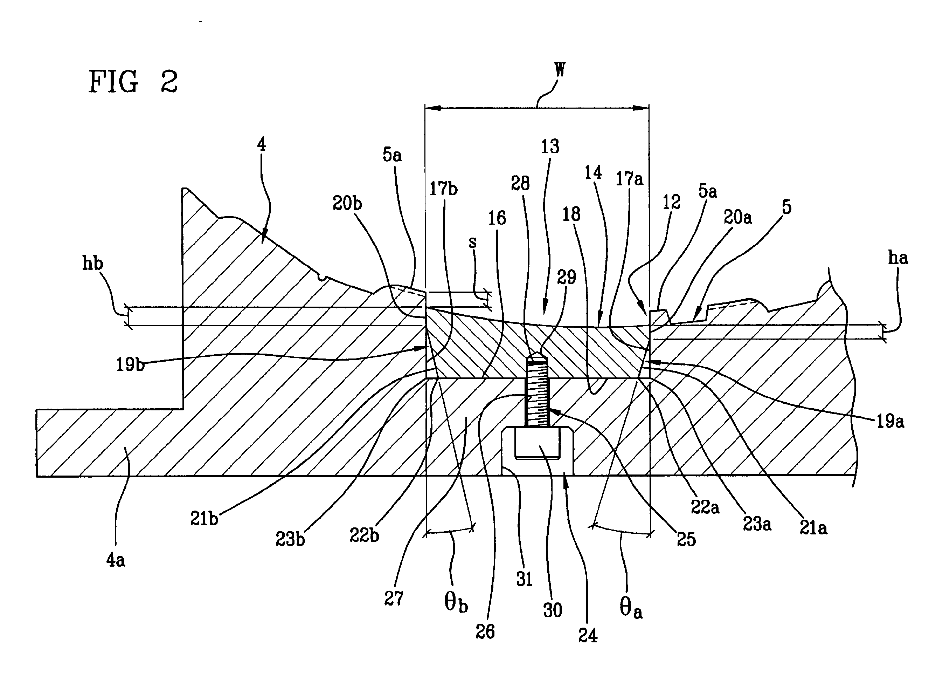

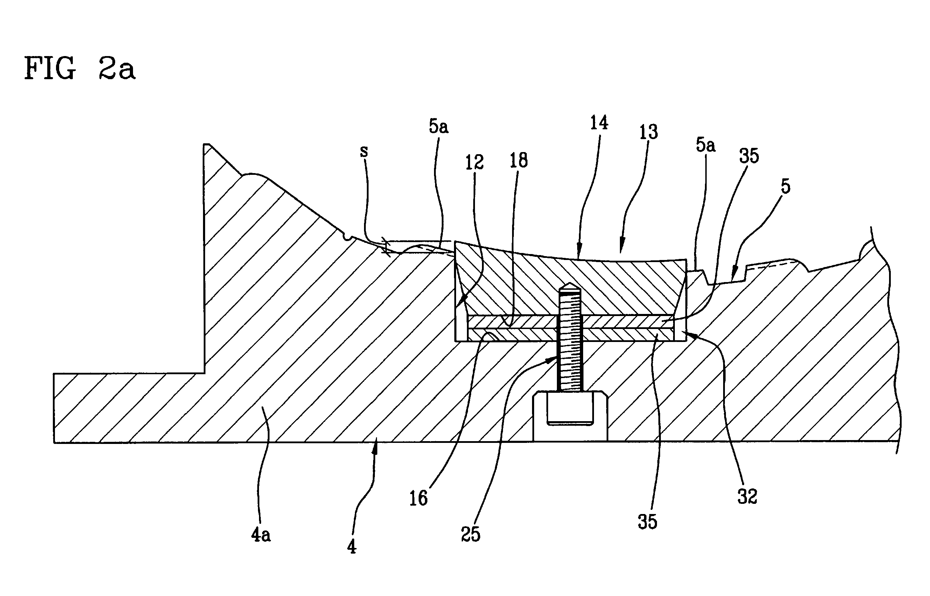

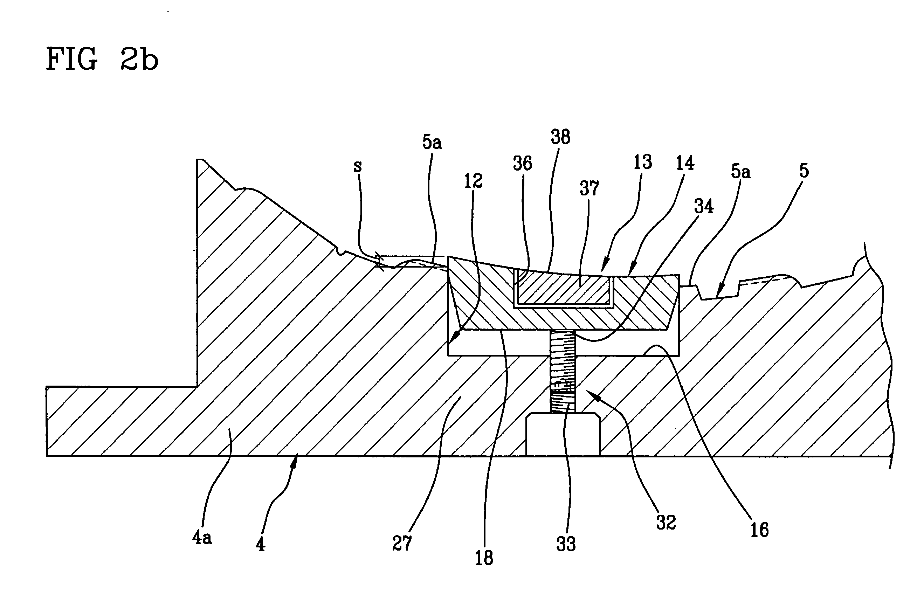

As shown in figure 2, 2a and 2b, the annular groove 12 has a constant width "w" or radial dimension along its own circumferential development.

The width "1" or radial dimension of the annular insert 13 is also constant along its own circumferential development (figures 3 and 3a).

Preferably (figure 1), the ratio between the radial dimension "1" of the annular insert 13 and the height "h" of the sidewall 7 of the tyre 2 is from about 0.3 to about 0.7.

As illustrated in more detail in figures 2, 2a and 2b, the annular groove 12 has a bottom wall 16 that is flat and perpendicular to an "X" axis of the mould 1 and the tyre 2; it also has cylindrical sidewalls 17a, 17b perpendicular to the bottom wall 16.

With reference to the diametral section of figure 2, the annular insert 13 has a back wall 18 that is flat and opposite the moulding face 14 and it can be pressed against the bottom wall 16 of the annular groove 12. The moulding face 14 has a substantially concave shape which, besides imprinting the graphic marks, gives the proper curve to the sidewall 7 of the tyre 2.

The annular insert 13 also has sidewalls 19a, 19b that are tapered, or reciprocally converging, from the moulding face 14 to the back wall 18.

In more detail, each of the sidewalls 19a, 19b has a cylindrical portion 20a, 20b perpendicular to the back wall 18 and a portion 21a, 21b that is slanted or truncated conical.

As shown in figure 2, when the insert 13 is mounted in the annular groove 12, the radially more external cylindrical portion 20b lies parallel to and facing the lateral wall 17b radially more external to the annular groove 12. At the same time the radially more internal cylindrical portion 20a lies parallel to and facing the lateral wall 17a radially more internal to the annular groove 12.

The height "hₐ" or axial dimension of the radially more internal cylindrical portion 20a is preferably from about 3 mm to about 5 mm.

The height "h_{b}" or axial dimension of the radially more external cylindrical portion 20b is preferably between about 3 mm and about 5 mm.

Preferably, when the tyre 2 is being heated and the mould 1 reaches a temperature of about 200 °C, each of the cylindrical portions 20a, 20b remains distanced from its own lateral wall 17a, 17b at a distance ranging from about 0.2 mm to 0.3 mm to delimit the air vent gaps. Additional gaps can be obtained between the moulding face 14 and the shell 4 by making axial grooves on.the cylindrical portions 20a, 20b and/or on the sidewalls 17a, 17b of the annular groove 12.

The air remaining trapped between the tyre 2 and the mould 1 can thereby flow in the space delimited by the tapered sidewalls 19a, 19b of the annular insert 13 and the sidewalls 17a, 17b of the annular groove 12 to then be expelled through further channels (not shown here) which communicate with the aforesaid space. Furthermore, a radially more internal edge 22a of the back wall 18 of the annular insert 13 is distanced from a respective radially more internal edge 23a of the annular groove 12 at a distance ranging from about 1 mm to about 2 mm.

Likewise, a radially more external edge 22b of the back wall 18 of the annular insert 13 lies distanced from a respective radially more external corner 23b of the annular groove 12 at a distance ranging from about 1 mm to about 2 mm.

The radially more internal truncated conical portion 21a with its respective radially more internal sidewall 17a of the annular groove 12 delimits an angle "θₐ" ranging from about 5° to about 10°.

Likewise the radially more external 21b truncated conical portion with the respective radially more external sidewall 17b of the annular groove 12 delimits an angle "θ_{b}" ranging from about 5° to about 10°.

The apparatus also includes devices 24 that can lock the annular insert 13 in the annular groove 12 after being inserted into it.

In a preferred example (figure 2), the locking devices 24 comprise 25 screws in through-holes 26 obtained through a wall 27 of the shell 4. The holes 26 lead to the bottom wall 16 of the annular groove 12 in such a way that a distal end 28 of each screw 25 is engaged to a corresponding seat 29 obtained in the back wall 18 of the annular insert 13. The head 30 of each screw 25 is preferably seated in a housing 31 obtained on the face of the wall 27 opposite the annular groove 12.

Preferably, the apparatus also includes devices 32 that can adjust the axial position of the moulding face 14. Preferably, this adjustment is achieved by modifying the depth of the annular insert 13 in the annular groove 12. According to one example (figure 2b), these adjustment devices 32 are defined by adjustment screws or dowels inserted in threaded through-holes 33 obtained through the wall 27 of the shell 4. The threaded holes 33 lead to the bottom wall 16 of the annular groove 12 so that one distal end 34 of each screw or dowel 32 is engaged to the back wall 18 of the annular insert 13. After adjusting the position of the aforesaid distal end 34 by rotating the screw/dowel 32, the annular insert 13 is locked against the distal ends 34 by tightening the clamping screws 25.

According to another example not shown here, the clamping screws also have the function of adjusting the depth of the annular insert 13.

According to another example (figure 2a), one or more spacers 35 are inserted between the bottom wall 16 of the annular groove 12 and the back wall 18 of the annular insert 13; the annular insert 13 is then locked against the spacers 35 by tightening the clamping screws 25.

Instead of using the spacers it is also possible to vary the axial position of the moulding face 14 by adopting annular inserts 13 having the same graphic marks 15 but with different thicknesses.

Regardless of the particular solution adopted, the moulding face 14 can be moved axially to create a projection or a recess on the working surface 5a of the shell 4 adjacent to the annular groove 12 and to the moulding face 14.

In an operative configuration (figures 2a and 2b), the moulding face 14 of the annular insert 13 projects beyond the working surface 5a adjacent to said moulding face 14 of a thickness "s", measured along an axial direction, ranging from about 0.5 mm to about 2 mm. The annular insert 13 therefore generates a respective cavity in the sidewall 7 of the tyre 2, the bottom surface of which bears the graphic marks 15.

In a different operative configuration (figure 2) not part of the present invention, the moulding face 14 of the annular insert 13 is recessed from the working surface 5a adjacent to said moulding face 14 of a thickness "s" ranging from about 0.5mm to about 2 mm, so that it defines a relief on the tyre 2. The surface of the relief axially external to the relief bears the graphic marks 15.

This adjustment also makes it possible to accurately check the maximum cord of the tyre 2, i.e. the maximum width of the tyre 2.

In fact, preferably, the annular insert 13 is positioned 23 in correspondence to an area of maximum axial width "z" of the moulding cavity 3, i.e. the area corresponding to the maximum cord of the vulcanized tyres 2. Given the curvature of the sidewall 7, the area of maximum axial width "z" coincides substantially with a circumference that in the diametral section of figure 1 corresponds to a point "z".

More in detail, according to one example, a first portion "1₁" of the radial dimension "1" of the annular insert 13 is located in a position radially internal to the area of maximum axial width "z" of the moulding cavity 3 and the ratio between said first portion "1₁" and the radial dimension "1" of the annular insert 13 is preferably between about 0.1 and about 0.4. In other words, the annular insert 13 extends prevalently on a portion of the mould 1 radially external to the area of maximum axial width "z".

Seats 36 can also be made in the moulding face 14 of the annular insert 13 to accommodate auxiliary inserts 37, each having its own moulding face 38 opposite the cavity 3 when the auxiliary insert 37 is mounted in the respective seat 36 (figure 2b). The moulding face 38 of the auxiliary insert 37 can also have graphic marks to imprint on the tyre 2.

The annular insert 13 can be obtained, for example, by fusion, moulding and/or removal of material. The graphic marks 15 and seats 36 (if any) for the auxiliary inserts 37 are made on the moulding face 14 before placing the annular insert 13 in the respective annular groove 12 of the shell 4.

Specifically, the seats 36 are obtained, for example, by removing material or directly by moulding.

According to one example, the graphic marks 15 are made by photoengraving.

Photoengraving is a work technique for removing material from a surface. The surface is covered with a protection layer that reproduces the geometric shapes to be obtained. This layer proofs the covered areas of the surface, which is then immersed in or sprayed with an acid substance that etches the unprotected parts, thereby removing the material.

In alternative the graphic marks 15 are made by spark erosion.

Spark erosion is a work process that consists of removing material from a piece by using electric sparks as a working means. This technique works all materials that are conductors of electricity, no matter how hard they are. The working action occurs by bringing the tool/electrode near the workpiece, after filling the working tub with a liquid dielectric. The electrode is powered with a positive polarity in relation to the piece so that the negatively charged material undergoes more erosion. When the electrode and the piece are sufficiently close to each other, sparks are triggered between them that erode the piece in a way that is complementary to the shape of the electrode.

In accordance with one example, the graphic marks 15 can also be made by working with milling machines.

To vulcanize and mould the tyre 2, preworked and preassembled annular inserts 13 (i.e. having the chosen graphic marks and auxiliary inserts) are mounted in the respective annular groove(s) 12 of the mould 1. Either the annular inserts 13 are chosen of the suitable thickness or the depth of the respective annular groove 12 is adjusted.

The green tyre 2 closed in the mould 1 is pressed against the containment walls and heat is applied. After vulcanization is completed, the mould is opened to remove the vulcanized tyre 2 and introduce a subsequent one to be vulcanized.

If it is necessary to obtain different decorations and/or wording on the sidewall 7 of the subsequent tyre 2, it is sufficient to substitute the annular insert 13 with a new annular insert 13 bearing different graphic marks and/or auxiliary inserts and repeat the above process.

## Claims

1. Apparatus for moulding and vulcanizing tyres, comprising:
a mould (1) for forming a moulding cavity (3) and comprising a pair of shells (4) axially opposed and each having a working surface (5); said working surface (5) having an annular development and being predisposed to operate on beads (6) and sidewalls (7) of a green tyre (2) to be vulcanized,
wherein the working surface (5) of at least one of the shells (4) has an annular groove (12) developing along the annular development of said working surface (5) and an annular insert (13) removably mounted in the annular groove (12);
said annular insert (13) having a moulding face (14) opposite the moulding cavity (3);
**characterized in that** said moulding face (14) has graphic marks (15) to imprint on the sidewall (7) of the tyre (2) and **in that** said moulding face (14) projects beyond the working surface (5a) adjacent to said moulding face (14).

2. Apparatus according to claim 1, wherein the graphic marks (15) on the moulding face (14) of the annular insert (13) are obtained by photoengraving.

3. Apparatus according to claim 1, wherein the graphic marks (15) on the moulding face (14) of the annular insert (13) are obtained by spark erosion.

4. Apparatus according to claim 1, wherein the annular insert (13) has seats (36) for auxiliary inserts (37).

5. Apparatus according to claim 1, also comprising devices (24) for locking the annular insert (13) into the annular groove (12).

6. Apparatus according to claim 1, also comprising devices (32) for adjusting the depth of the position of the annular insert (13) into the annular groove (12).

7. Apparatus according to claim 6, wherein, in one operative configuration, the moulding face (14) of the annular insert (13) projects beyond a surface (5a) of the shell (4) adjacent to said moulding face (14) by a higher thickness (s) of about 0.5 mm.

8. Apparatus according to claim 6, wherein, in one operative configuration, the moulding face (14) of the annular insert (13) projects beyond a surface (5a) of the shell (4) adjacent to said moulding face (14) by a lower thickness (s) of about 2 mm.

9. Apparatus according to claim 1, wherein the annular insert (13) is positioned in correspondence to an area (z) of maximum axial width of the moulding cavity (3).

10. Apparatus according to claim 1, wherein the ratio between a radial dimension (1) of the annular insert (13) and the height (h) of the sidewall (7) of the tyre (2) is more than about 0.3.

11. Apparatus according to claim 1, wherein the ratio between a radial dimension (1) of the annular insert (13) and the height (h) of the sidewall (7) of the tyre (2) is less than about 0.7.

12. Apparatus according to claim 1, wherein a first portion (1₁) of a radial dimension (1) of the annular insert (13) is located in a position radially internal to an area (z) of maximum axial width of the moulding cavity (3); the ratio between said first portion (l₁) and the radial dimension (1) of the annular insert (13) is more than about 0.1.

13. Apparatus according to claim 1, wherein a first portion (l₁) of a radial dimension (l) of the annular insert (13) is located in a position radially internal to an area (z) of maximum axial width of the moulding cavity (3); the ratio between said first portion (l₁) and the radial dimension (l) of the annular insert (13) is less than about 0.4.

14. Apparatus according to claim 1, wherein the annular insert (13) has tapered sidewalls (19a, 19b) inserted in the annular groove (12) and facing sidewalls (17a, 17b) of said annular groove (12).

15. Apparatus according to claim 14, wherein the tapered sidewalls (19a, 19b) make an angle (θ) with the respective sidewalls (17a, 17b) of the annular groove (12) which is greater than about 5°.

16. Apparatus according to claim 14, wherein the tapered sidewalls (19a, 19b) make an angle (θ) with the respective sidewalls (17a, 17b) of the annular groove (12) which is smaller than about 10°.

17. Apparatus according to claim 14, wherein, between the moulding face (14) of the annular insert (13) and the shell (4), there are vent holes for the air in fluid communication with a space delimited between the tapered sidewalls (19a, 19b) of said annular insert (13) and the sidewalls (17a, 17b) of said annular groove (12).

18. Process for moulding and vulcanization of tyres, comprising the phases of:
preparing a mould (1) for forming a moulding cavity (3) corresponding to the outside shape of the vulcanized tyre and comprising a pair of shells (4) axially opposed; each of said shells (4) having a working surface (5) with an annular development and predisposed to operate on beads (6) and on sidewalls (7) of a green tyre (2) to be vulcanized;
obtaining on at least one of the working surfaces (5) an annular groove (12) developing along the annular development of said working surface (5);
preparing an annular insert (13) comprising a moulding face (14) having graphic marks (15) to imprint on a sidewall (7) of the tyre (2);
removably mounting the annular insert (13) in the annular groove (12) with the moulding face (14) opposite the moulding cavity (3); wherein said moulding face (14) projects beyond the working surface (5a) adjacent to said moulding face (14);
introducing a green tyre (2) to be vulcanized in the moulding cavity (3);
closing the mould (1) to predispose the working surfaces (5) to operate on the beads (6) and the sidewalls (7) of the green tyre (2) to be vulcanized;
pressing the green tyre (2) against the working surfaces (5) to imprint the graphic marks (15) on the sidewall (7) of the tyre (2) and apply heat to the green tyre (2);
wherein the annular insert (13) generates a respective cavity in the sidewall (7) of the tyre (2) and the bottom surface of said cavity bears the graphic marks (15).

19. Process according to claim 18, wherein the phase of preparing an annular insert (13) comprises:
making the graphic marks (15) on the moulding face (14) before mounting said annular insert (13) in the annular groove (12).

20. Process according to claim 18, wherein the phase of preparing an annular insert (13) comprises:
making graphic marks (15) on the moulding face (14) by photoengraving.

21. Process according to claim 18, wherein the phase of preparing an annular insert (13) comprises:
making graphic marks (15) on the moulding face (14) by means of spark erosion.

22. Process according to claim 18, wherein the phase of preparing an annular insert (13) comprises:
making seats (36) for auxiliary inserts (37) in the moulding face (14) of the annular insert (13).

23. Process according to claim 22, wherein the phase of preparing an annular insert (13) comprises:
making seats (36) for auxiliary inserts (37) in the moulding face (14) of the annular insert (13) before mounting the annular insert (13) in the annular groove (12).

24. Process according to claim 22, wherein the phase of preparing an annular insert (13) comprises:
making seats (36) for auxiliary inserts (37) in the moulding face (14) of the annular insert (13);
installing the auxiliary inserts (37) in the seats (36) of the moulding face (14) of the annular insert (13) before mounting said annular insert (13) in the annular seat (12).

25. Process according to claim 22, wherein the phase of mounting an annular insert (13) comprises:
adjusting the depth of the annular insert (13) in the annular groove (12).

26. Process according to claim 18, wherein, after the phase of applying heat to the green tyre (2), the following phases are carried out:
opening the mould (1);
removing the vulcanized tyre (2);
replacing the annular insert (13) with a new annular insert (13) to imprint different graphic marks (15) on the sidewall (7) of a subsequent tyre (2);
introducing a subsequent green tyre (2) to be vulcanized in the moulding cavity (3);
closing the mould (1) to predispose the working surfaces (5) to work on the beads (6) and sidewalls (7) of said subsequent green tyre (2) to be vulcanized;
pressing said subsequent green tyre (2) against the working surfaces (5) to imprint graphic marks (15) on the sidewall (7) of the tyre (2), and
applying heat to said subsequent green tyre (2).

## Patentansprüche

1. Vorrichtung zum Formen und Vulkanisieren von Reifen, umfassend:
eine Form (1) zum Ausbilden eines Formhohlraums (3) und umfassend ein Paar Schalen (4), die einander axial gegenüberliegen und jede eine Arbeitsfläche (5) aufweisen; wobei die Arbeitsfläche (5) eine ringförmige Erweiterung aufweist und zum Arbeiten an Wülsten (6) und Seitenwänden (7) eines Rohreifens (2), der vulkanisiert werden soll, vorgesehen ist,
wobei die Arbeitsfläche (5) von zumindest einer der Schalen (4) eine ringförmige Nut (12), die sich entlang der ringförmigen Erweiterung der Arbeitsfläche (5) erweitert, und einen ringförmigen Einsatz (13) aufweist, der abnehmbar in der ringförmigen Nut (12) angebracht ist;
wobei der ringförmige Einsatz (13) eine Formfläche (14) gegenüber dem Formhohlraum (3) aufweist;
**dadurch gekennzeichnet, dass** die Formfläche (14) grafische Markierungen (15) zum Einprägen auf die Seitenwand (7) des Reifens (2) aufweist, und dass die Formfläche (14) über die Arbeitsfläche (5a), die der Formfläche (14) benachbart ist, hinaus vorsteht.

2. Vorrichtung nach Anspruch 1, wobei die grafischen Markierungen (15) an der Formfläche (14) des ringförmigen Einsatzes (13) durch Chemiegrafie erzielt sind.

3. Vorrichtung nach Anspruch 1, wobei die grafischen Markierungen (15) auf der Formfläche (14) des ringförmigen Einsatzes (13) durch Funkenerosion erzielt sind.

4. Vorrichtung nach Anspruch 1, wobei der ringförmige Einsatz (13) Sitze (36) für zusätzliche Einsätze (37) aufweist.

5. Vorrichtung nach Anspruch 1, außerdem umfassend Geräte (24) zum Arretieren des ringförmigen Einsatzes (13) in der ringförmigen Nut (12).

6. Vorrichtung nach Anspruch 1, außerdem umfassend Geräte (32) zum Einstellen der Tiefe der Position des ringförmigen Einsatzes (13) in der ringförmigen Nut (12).

7. Vorrichtung nach Anspruch 6, wobei in einer Betriebskonfiguration die Formfläche (14) des ringförmigen Einsatzes (13) über eine Oberfläche (5a) der Schale (4), die der Formfläche (14) benachbart ist, um eine größere Stärke (s) von ungefähr 0,5 mm hinaus vorsteht.

8. Vorrichtung nach Anspruch 6, wobei in einer Betriebskonfiguration die Formfläche (14) des ringförmigen Einsatzes (13) über eine Oberfläche (5a) der Schale (4), die der Formfläche (14) benachbart ist, um eine geringere Stärke (s) von ungefähr 2 mm hinaus vorsteht.

9. Vorrichtung nach Anspruch 1, wobei der ringförmige Einsatz (13) entsprechend einem Bereich (z) maximaler axialer Breite des Formhohlraums (3) angeordnet ist.

10. Vorrichtung nach Anspruch 1, wobei das Verhältnis zwischen einer radialen Abmessung (1) des ringförmigen Einsatzes (13) und der Höhe (h) der Seitenwand (7) des Reifens (2) über ungefähr 0,3 liegt.

11. Vorrichtung nach Anspruch 1, wobei das Verhältnis zwischen einer radialen Abmessung (1) des ringförmigen Einsatzes (13) und der Höhe (h) der Seitenwand (7) des Reifens (2) unter ungefähr 0,7 liegt.

12. Vorrichtung nach Anspruch 1, wobei sich ein erster Abschnitt (1₁) einer radialen Abmessung (1) des ringförmigen Einsatzes (13) in einer Position radial intern zu einem Bereich (z) maximaler axialer Breite des Formhohlraums (3) befindet; wobei das Verhältnis zwischen dem ersten Abschnitt (l₁) und der radialen Abmessung (1) des ringförmigen Einsatzes (13) über ungefähr 0,1 liegt.

13. Vorrichtung nach Anspruch 1, wobei sich ein erster Abschnitt (l₁) einer radialen Abmessung (1) des ringförmigen Einsatzes (13) in einer Position radial intern zu einem Bereich (z) maximaler axialer Breite des Formhohlraums (3) befindet; wobei das Verhältnis zwischen dem ersten Abschnitt (1₁) und der radialen Abmessung (1) des ringförmigen Einsatzes (13) unter ungefähr 0,4 liegt.

14. Vorrichtung nach Anspruch 11, wobei der ringförmige Einsatz (13) konisch zulaufende Seitenwände (19a, 19b) aufweist, die in die ringförmige Nut (12) eingesetzt und Seitenwänden (17a, 17b) der ringförmigen Nut (12) zugekehrt sind.

15. Vorrichtung nach Anspruch 14, wobei die konisch zulaufenden Seitenwände (19a, 19b) einen Winkel (θ) mit den jeweiligen Seitenwänden (17a, 17b) der ringförmigen Nut (12) bilden, der größer als ungefähr 5° ist.

16. Vorrichtung nach Anspruch 14, wobei die konisch zulaufenden Seitenwände (19a, 19b) einen Winkel (θ) mit den jeweiligen Seitenwänden (17a, 17b) der ringförmigen Nut (12) bilden, der kleiner als ungefähr 10° ist.

17. Vorrichtung nach Anspruch 14, wobei zwischen der Formfläche (14) des ringförmigen Einsatzes (13) und der Schale (4) Lüftungslöcher für die Luft in Fluidverbindung mit einem Raum vorhanden sind, der zwischen den konisch zulaufenden Seitenwänden (19a, 19b) des ringförmigen Einsatzes (13) und den Seitenwänden (17a, 17b) der ringförmigen Nut (12) begrenzt ist.

18. Verfahren zum Formen und Vulkanisieren von Reifen, folgende Phasen umfassend:
Bereitstellen einer Form (1) zum Ausbilden eines Formhohlraums (3), der der Außenform des vulkanisierten Reifens entspricht und ein Paar Schalen umfasst, die einander axial gegenüberliegen; wobei jede der Schalen (4) eine Arbeitsfläche (5) mit einer ringförmigen Erweiterung aufweist und zum Arbeiten an Wülsten (6) und Seitenwänden (7) eines Rohreifens (2), der vulkanisiert werden soll, vorgesehen ist;
Erzielen, auf zumindest einer der Arbeitsflächen (5), einer ringförmigen Nut (12), die sich entlang der Erweiterung der Arbeitsfläche (5) erweitert;
Bereitstellen eines ringförmigen Einsatzes (13), der eine Formfläche (14) mit grafischen Markierungen (15) zum Einprägen auf einer Seitenwand (7) des Reifens (2) aufweist;
abnehmbares Anbringen des ringförmigen Einsatzes (13) in der ringförmigen Nut (12), wobei die Formfläche (14) dem Formhohlraum (3) gegenüberliegt; wobei die Formfläche (14) über die Arbeitsfläche (5a), die der Formfläche (14) benachbart ist, hinaus vorsteht;
Einführen eines Rohreifens (2), der in dem Formhohlraum (3) vulkanisiert werden soll;
Schließen der Form (1) zum Bereitstellen der Arbeitsflächen (5) zum Arbeiten an den Wülsten (6) und den Seitenwänden (7) des Rohreifens (2), der vulkanisiert werden soll;
Pressen des Rohreifens (2) an die Arbeitsflächen (5) zum Einprägen der grafischen Markierungen (15) auf die Seitenwand (7) des Reifens (2) und Zuführen von Wärme zum Reifen (2);
wobei der ringförmige Einsatz (13) einen jeweiligen Hohlraum in der Seitenwand (7) des Reifens (2) erzeugt und die Bodenfläche des Hohlraums die grafischen Markierungen (15) trägt.

19. Verfahren nach Anspruch 18, wobei die Phase des Bereitstellens eines ringförmigen Einsatzes (13) Folgendes umfasst:
Herstellen der grafischen Markierungen (15) auf der Formfläche (14) vor dem Anbringen des ringförmigen Einsatzes (13) in der ringförmigen Nut (12).

20. Verfahren nach Anspruch 18, wobei die Phase des Bereitstellens eines ringförmigen Einsatzes (13) Folgendes umfasst:
Herstellen der grafischen Markierungen (15) durch Chemiegrafie.

21. Verfahren nach Anspruch 18, wobei die Phase des Bereitstellens eines ringförmigen Einsatzes (13) Folgendes umfasst:
Herstellen der grafischen Markierungen (15) durch Funkenerosion.

22. Verfahren nach Anspruch 18, wobei die Phase des Bereitstellens eines ringförmigen Einsatzes (13) Folgendes umfasst:
Herstellen von Sitzen (36) für zusätzliche Einsätze (37) in der Formfläche (14) des ringförmigen Einsatzes (13).

23. Verfahren nach Anspruch 22, wobei die Phase des Bereitstellens eines ringförmigen Einsatzes (13) Folgendes umfasst:
Herstellen von Sitzen (36) für zusätzliche Einsätze (37) in der Formfläche (14) des ringförmigen Einsatzes (13) vor dem Anbringen des ringförmigen Einsatzes (13) in der ringförmigen Nut (12).

24. Verfahren nach Anspruch 22, wobei die Phase des Bereitstellens eines ringförmigen Einsatzes (13) Folgendes umfasst:
Herstellen von Sitzen (36) für zusätzliche Einsätze (37) in der Formfläche (14) des ringförmigen Einsatzes (13);
Einrichten der zusätzlichen Einsätze (37) in den Sitzen (36) der Formfläche (14) des ringförmigen Einsatzes (13) vor dem Anbringen des ringförmigen Einsatzes (13) in der ringförmigen Nut (12).

25. Verfahren nach Anspruch 22, wobei die Phase des Anbringens eines ringförmigen Einsatzes (13) Folgendes umfasst:
Einstellen der Tiefe des ringförmigen Einsatzes (13) in der ringförmigen Nut (12).

26. Verfahren nach Anspruch 18, wobei, nach dem Zuführen von Wärme zum Rohreifen (2), die folgenden Phasen ausgeführt werden:
Öffnen der Form (1);
Herausnehmen des vulkanisierten Reifens (2);
Ersetzen des ringförmigen Einsatzes (13) durch einen neuen ringförmigen Einsatz (13) zum Einprägen von anderen grafischen Markierungen (15) auf die Seitenwand (7) eines folgenden Reifens (2);
Einführen eines folgenden Rohreifens (2), der im Formhohlraum (3) vulkanisiert werden soll;
Schließen der Form (1) zum Bereitstellen der Arbeitsfläche (5) zum Arbeiten an den Wülsten (6) und Seitenwänden (7) des folgenden Rohreifens (2), der vulkanisiert werden soll;
Pressen des folgenden Rohreifens (2) an die Arbeitsfläche (5) zum Einprägen von grafischen Markierungen (15) auf die Seitenwand (7) des Reifens (2), und
Zuführen von Wärme zum folgenden Rohreifen (2).

## Revendications

1. Appareil de moulage et de vulcanisation de pneus, comprenant :
un moule (1) destiné à former une cavité de moulage (3) et comprenant une paire de coquilles (4) axialement opposées et ayant chacune une surface de travail (5) ; ladite surface de travail (5) ayant un développement annulaire et étant prédisposée pour opérer sur des bourrelets (6) et des parois latérales (7) d'un pneu cru (2) à vulcaniser,
dans lequel la surface de travail (5) d'au moins l'une des coquilles (4) a une rainure annulaire (12) se développant le long du développement annulaire de ladite surface de travail (5) et un insert annulaire (13) monté de manière amovible dans la rainure annulaire (12) ;
ledit insert annulaire (13) ayant une face de moulage (14) opposée à la cavité de moulage (3) ;
**caractérisé en ce que** ladite face de moulage (14) a des marques graphiques (15) pour imprimer sur la paroi latérale (7) du pneu (2) et **en ce que** ladite face de moulage (14) fait saillie au-delà de la surface de travail (5a) adjacente à ladite face de moulage (14).

2. Appareil selon la revendication 1, dans lequel les marques graphiques (15) sur la face de moulage (14) de l'insert annulaire (13) sont obtenues par photogravure.

3. Appareil selon la revendication 1, dans lequel les marques graphiques (15) sur la face de moulage (14) de l'insert annulaire (13) sont obtenues par érosion par étincelles.

4. Appareil selon la revendication 1, dans lequel l'insert annulaire (13) a des sièges (36) pour des inserts auxiliaires (37).

5. Appareil selon la revendication 1, comprenant en outre des dispositifs (24) pour bloquer l'insert annulaire (13) dans la rainure annulaire (12).

6. Appareil selon la revendication 1, comprenant en outre des dispositifs (32) pour régler la profondeur de la position de l'insert annulaire (13) dans la rainure annulaire (12).

7. Appareil selon la revendication 6, dans lequel, dans une configuration opérationnelle, la face de moulage (14) de l'insert annulaire (13) fait saillie au-delà d'une surface (5a) de la coquille (4) adjacente à ladite face de moulage (14) par une grande épaisseur (s) d'environ 0,5 mm.

8. Appareil selon la revendication 6, dans lequel, dans une configuration opérationnelle, la face de moulage (14) de l'insert annulaire (13) fait saillie au-delà d'une surface (5a) de la coquille (4) adjacente à ladite face de moulage (14) par une petite épaisseur (s) d'environ 2 mm.

9. Appareil selon la revendication 1, dans lequel l'insert annulaire (13) est positionné en correspondance avec une zone (z) de largeur axiale maximale de la cavité de moulage (3).

10. Appareil selon la revendication 1, dans lequel le rapport entre une dimension radiale (1) de l'insert annulaire (13) et la hauteur (h) de la paroi latérale (7) du pneu (2) est supérieur à environ 0,3.

11. Appareil selon la revendication 1, dans lequel le rapport entre une dimension radiale (l) de l'insert annulaire (13) et la hauteur (h) de la paroi latérale (7) du pneu (2) est inférieur à environ 0,7.

12. Appareil selon la revendication 1, dans lequel une première partie (l₁) d'une dimension radiale (l) de l'insert annulaire (13) est située dans une position radialement interne par rapport à une zone (z) de largeur axiale maximale de la cavité de moulage (3) ; le rapport entre ladite première partie (l₁) et la dimension radiale (1) de l'insert annulaire (13) est supérieur à environ 0,1.

13. Appareil selon la revendication 1, dans lequel une première partie (l₁) d'une dimension radiale (l) de l'insert annulaire (13) est située dans une position radialement interne par rapport à une zone (z) de largeur axiale maximale de la cavité de moulage (3) ; le rapport entre ladite première partie (l₁) et la dimension radiale (1) de l'insert annulaire (13) est inférieur à environ 0,4.

14. Appareil selon la revendication 1, dans lequel l'insert annulaire (13) a des parois latérales coniques (19a, 19b) insérées dans la rainure annulaire (12) et faisant face aux parois latérales (17a, 17b) de ladite rainure annulaire (12).

15. Appareil selon la revendication 14, dans lequel les parois latérales coniques (19a, 19b) forment un angle (θ) avec les parois latérales respectives (17a, 17b) de la rainure annulaire (12) qui est supérieur à environ 5°.

16. Appareil selon la revendication 14, dans lequel les parois latérales coniques (19a, 19b) forment un angle (θ) avec les parois latérales respectives (17a, 17b) de la rainure annulaire (12) qui est inférieur à environ 10°.

17. Appareil selon la revendication 14, dans lequel, entre la face de moulage (14) de l'insert annulaire (13) et la coquille (4), il existe des trous d'aération pour l'air en communication fluidique avec un espace délimité entre les parois latérales coniques (19a, 19b) dudit insert annulaire (13) et les parois latérales (17a, 17b) de ladite rainure annulaire (12).

18. Processus de moulage et de vulcanisation de pneus, comprenant les phases qui consistent :
à préparer un moule (1) pour former une cavité de moulage (3) correspondant à la forme extérieure du pneu vulcanisé et comprenant une paire de coquilles (4) axialement opposées ; chacune desdites coquilles (4) ayant une surface de travail (5) avec un développement annulaire et prédisposée pour opérer sur des bourrelets (6) et sur des parois latérales (7) d'un pneu cru (2) à vulcaniser ;
à obtenir, sur au moins l'une des surfaces de travail (5), une rainure annulaire (12) se développant le long du développement annulaire de ladite surface de travail (5) ;
à préparer un insert annulaire (13) comprenant une face de moulage (14) ayant des marques graphiques (15) pour imprimer sur une paroi latérale (7) du pneu (2) ;
à monter de manière amovible l'insert annulaire (13) dans la rainure annulaire (12) avec la face de moulage (14) opposée à la cavité de moulage (3) ; où ladite face de moulage (14) fait saillie au-delà de la surface de travail (5a) adjacente à ladite face de moulage (14) ;
à introduire un pneu cru (2) à vulcaniser dans la cavité de moulage (3) ;
à fermer le moule (1) pour prédisposer les surfaces de travail (5) pour opérer sur les bourrelets (6) et les parois latérales (7) du pneu cru (2) à vulcaniser ;
à presser le pneu cru (2) contre les surfaces de travail (5) pour imprimer les marques graphiques (15) sur la paroi latérale (7) du pneu (2) et pour appliquer de la chaleur au pneu cru (2) ;
où l'insert annulaire (13) génère une cavité respective dans la paroi latérale (7) du pneu (2) et la surface inférieure de ladite cavité porte les marques graphiques (15).

19. Processus selon la revendication 18, dans lequel la phase de préparation d'un insert annulaire (13) comprend le fait :
de réaliser les marques graphiques (15) sur la face de moulage (14) avant le montage dudit insert annulaire (13) dans la rainure annulaire (12).

20. Processus selon la revendication 18, dans lequel la phase de préparation d'un insert annulaire (13) comprend le fait :
de réaliser les marques graphiques (15) sur la face de moulage (14) par photogravure.

21. Processus selon la revendication 18, dans lequel la phase de préparation d'un insert annulaire (13) comprend le fait :
de réaliser les marques graphiques (15) sur la face de moulage (14) au moyen d'une érosion par étincelles.

22. Processus selon la revendication 18, dans lequel la phase de préparation d'un insert annulaire (13) comprend le fait :
de réaliser des sièges (36) pour des inserts auxiliaires (37) dans la face de moulage (14) de l'insert annulaire (13).

23. Processus selon la revendication 22, dans lequel la phase de préparation d'un insert annulaire (13) comprend le fait :
de réaliser des sièges (36) pour des inserts auxiliaires (37) dans la face de moulage (14) de l'insert annulaire (13) avant le montage de l'insert annulaire (13) dans la rainure annulaire (12).

24. Processus selon la revendication 22, dans lequel la phase de préparation d'un insert annulaire (13) comprend le fait :
de réaliser des sièges (36) pour des inserts auxiliaires (37) dans la face de moulage (14) de l'insert annulaire (13) ;
d'installer les inserts auxiliaires (37) dans les sièges (36) de la face de moulage (14) de l'insert annulaire (13) avant le montage dudit insert annulaire (13) dans le siège annulaire (12).

25. Processus selon la revendication 22, dans lequel la phase de montage d'un insert annulaire (13) comprend le fait :
de régler la profondeur de l'insert annulaire (13) dans la rainure annulaire (12).

26. Processus selon la revendication 18, dans lequel, après la phase d'application de chaleur au pneu cru (2), les phases suivantes sont réalisées :
l'ouverture du moule (1) ;
le retrait du pneu vulcanisé (2) ;
le remplacement de l'insert annulaire (13) par un nouvel insert annulaire (13) pour imprimer différentes marques graphiques (15) sur la paroi latérale (7) d'un pneu suivant (2) ;
l'introduction d'un pneu cru suivant (2) à vulcaniser dans la cavité de moulage (3) ;
la fermeture du moule (1) pour prédisposer les surfaces de travail (5) pour travailler sur les bourrelets (6) et les parois latérales (7) dudit pneu cru suivant (2) à vulcaniser ;
la pression dudit pneu cru suivant (2) contre les surfaces de travail (5) pour imprimer des marques graphiques (15) sur la paroi latérale (7) du pneu (2), et
l'application de la chaleur audit pneu cru suivant (2)
